(19) Europäisches Patentamt
European Patent Office
Office européen des brevets

(11) **EP 2 465 255 B1**

(12) **FASCICULE DE BREVET EUROPEEN**

(45) Date de publication et mention
de la délivrance du brevet:
**05.06.2013 Bulletin 2013/23**

(21) Numéro de dépôt: **10762974.3**

(22) Date de dépôt: **06.08.2010**

(51) Int Cl.:
*H04N 5/14* (2006.01)   *H04N 5/232* (2006.01)
*H04N 9/64* (2006.01)   *G03B 13/36* (2006.01)
*G06T 7/00* (2006.01)

(86) Numéro de dépôt international:
**PCT/FR2010/051671**

(87) Numéro de publication internationale:
**WO 2011/018575 (17.02.2011 Gazette 2011/07)**

(54) **SYSTÈME ET PROCÉDÉ DE CAPTURE D'IMAGES AVEC DEUX MODES DE FONCTIONNEMENT**

BILDAUFNAHMESYSTEM UND VERFAHREN MIT ZWEI BETRIEBSARTEN

IMAGE-CAPTURE SYSTEM AND METHOD WITH TWO OPERATING MODES

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **10.08.2009 FR 0955593**

(43) Date de publication de la demande:
**20.06.2012 Bulletin 2012/25**

(73) Titulaire: **DxO Labs
92100 Boulogne Billancourt (FR)**

(72) Inventeurs:
• **DEVAUX, Ghislain**
  **F-92130 Issy Les Moulineaux (FR)**
• **GUICHARD, Frédéric**
  **F-75012 Paris (FR)**
• **KNAUER, Etienne**
  **F-92100 Boulogne Billancourt (FR)**
• **LIEGE, Bruno**
  **F-92100 Boulogne Billancourt (FR)**
• **NGUYEN, Hoang-Phi**
  **F-75013 Paris (FR)**
• **TESSIERES, Régis**
  **F-75015 Paris (FR)**

(74) Mandataire: **Deschamps, Samuel
Cabinet Schmit-Chretien
16 rue de la Paix
75002 Paris (FR)**

(56) Documents cités:
**US-A1- 2005 185 086     US-B1- 6 198 506**

**Description**

La présente invention concerne le domaine des systèmes numériques de capture d'images (fixes ou animés) tels que ceux contenus dans les appareils photos, caméras, photophones (téléphones mobiles aptes à capturer des photos), scanners, fax, endoscopes, caméras de surveillance, jouets, assistants personnels, ordinateurs, caméras thermiques, appareils d'échographie, appareils d'imagerie IRM (résonance magnétique), appareils de radiographies à rayons X etc.

Il comprend classiquement un capteur incluant une pluralité d'éléments photosensibles, appelés pixels, qui transforment une quantité de lumière reçue en valeurs numériques, et une optique pour focaliser la lumière vers le capteur.

Le capteur peut être par exemple un détecteur à transfert de charge CCD (Charged Coupled Device), un CMOS (Complementary Metal Oxyde Semiconductor), un CID (Charge Induced Device), un IRCCD (Infra-Red CCD), un ICCD (Intensified CCD), un EBCCD (Electron Bombarded CCD), un MIS (Metal Insulator Semiconductor), un APS (Active Pixel Sensor), un QWIP (Quantum Well Infrared Photodetectors), un MPQ (Multi-Puits Quantiques), un capteur sensible au spectre lumineux et/ou à d'autres bandes spectrales électromagnétiques ou autre. Il peut éventuellement être associé à un filtre de Bayer afin d'obtenir une image couleur. Certains de ces capteurs pouvant compter plusieurs millions de pixels, l'unité actuellement utilisée pour comptabiliser les pixels d'un capteur est le Megapixel.

Plus précisément, l'invention concerne le problème de l'obtention d'images nettes par ces systèmes de capture d'images.

On connaît les systèmes de capture d'image comprenant une optique, un capteur d'images numérique et un module d'autofocus.

Par optique, on entend un système optique comprenant un ou plusieurs éléments parmi notamment des lentilles, des miroirs et/ou des éléments diffractifs.

Le module d'autofocus comporte une fonction de mise au point automatique adaptée pour régler la focalisation du système de manière à obtenir une image nette.

L'opération de focalisation consiste à faire converger les rayons lumineux à la sortie de l'optique au niveau du capteur d'images. Par converger, on entend minimiser la taille de la tache image obtenue au niveau du capteur d'image.

Cette focalisation est généralement déterminée par itérations successives, en parcourant différentes configurations accessibles avec le module d'autofocus et en mesurant en chacune de ces configurations la netteté, par exemple pour la composante de couleur verte lorsqu'il s'agit d'une image couleur.

On notera que dans le présent document, les termes de « composante de couleur » et de « couleur » correspondent à la même notion.

L'utilisation du module autofocus présente cependant deux inconvénients majeurs : le temps pour déterminer la configuration optimale peut être long (ce temps est nommé latence de mise au point) et la consommation électrique engendrée notamment pour effectuer les déplacements est importante.

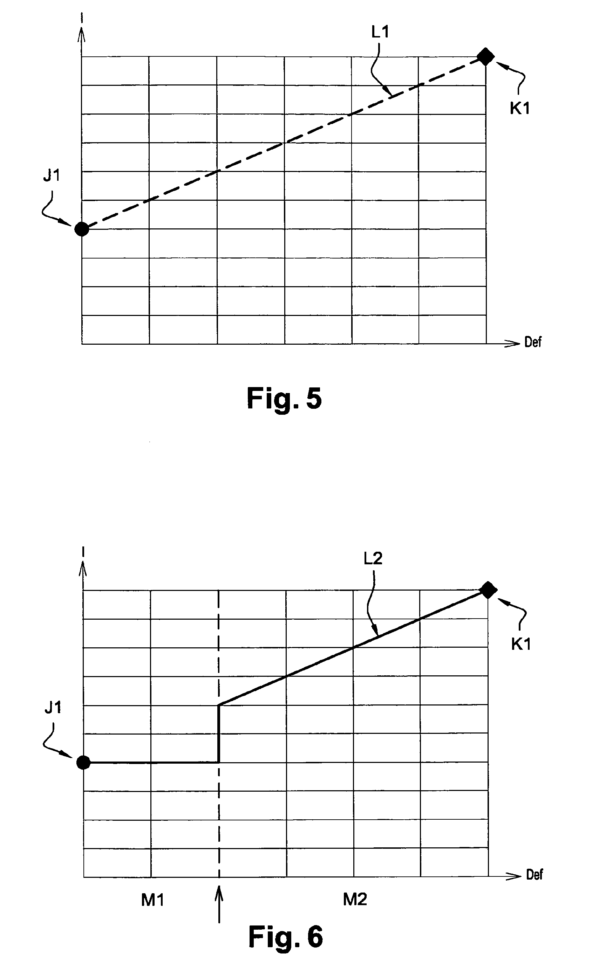

Sur la figure 5 est illustrée la consommation électrique d'un système de capture avec module autofocus de l'art antérieur : la courbe L1 entre les points J1 et K1 représente les valeurs d'intensité électrique en fonction des valeurs de défocalisation dans le cas d'un système focalisant entre un objet placé à l'infini et un objet proche. Le point J1 correspond à une défocalisation nulle (objet à l'infini) et le point K1 correspond à une défocalisation maximum (objet proche).

Cette figure est donnée à titre d'exemple, la consommation électrique fonction de la défocalisation pouvant varier suivant le type de module autofocus employé.

C'est d'ailleurs pour cette raison que dans la plupart des photophones, le module autofocus n'est pas activé (il est fixé pour un objet à l'infini) quand l'utilisateur se sert du photophone en mode de prévisualisation (c'est-à-dire lorsque l'image n'est capturée qu'à faible résolution (on appelle résolution le nombre de pixels contenus dans l'image) : par exemple 320 pixels*400 pixels maximum, avant la véritable prise de vue déclenchée par l'utilisateur, à plus forte résolution). Le module autofocus n'est activé qu'au moment de la prise de vue déclenchée par l'utilisateur. Celui-ci ne sait donc pas a priori si l'image issue de cette prise de vue sera floue ou non.

Il est donc nécessaire d'avoir une solution permettant d'obtenir des images nettes tout en minimisant la consommation d'énergie et la latence de mise au point.

A cet effet, suivant un premier aspect, l'invention propose un système de capture d'images numérique adapté pour capturer au moins une image d'une scène, ledit système comprenant une optique, un capteur, un module d'autofocus adapté pour régler la focalisation du système et des moyens de traitement numérique.

Ce système est adapté pour estimer une valeur représentative de la netteté sur au moins une région d'au moins une image initiale capturée d'une scène, le module autofocus étant positionné pour capturer l'image initiale avec une focalisation prédéfinie du système. Le système est en outre adapté pour, en fonction d'au moins la valeur représentative de la netteté estimée, sélectionner un mode de fonctionnement parmi un premier mode et un second mode. Dans le premier mode, le module d'autofocus est mis en oeuvre pour régler la focalisation du système pour capturer une image plus nette de la scène ; et dans le second mode l'image initiale capturée ou une autre image capturée est traitée par les moyens de traitement numérique, l'autre image étant capturée avec ladite focalisation prédéfinie du système.

Un tel système permet d'améliorer la netteté des images fournies par le système de capture tout en diminuant la latence et la consommation d'énergie nécessaires, en utilisant les traitements numériques lorsqu'ils sont adaptés et en réservant l'utilisation du module autofocus pour les cas où elle est strictement nécessaire pour améliorer la netteté.

Le réglage de la focalisation est réalisé généralement à l'aide d'un actuateur (de technologie voice coil, moteur pas à pas, dispositif piezo électrique, MEMS (Microelectromechanical systems), USM (Ultra Sonic Motor) ou tout autre moyen) pour déplacer l'optique et /ou le capteur, ou encore pour effectuer des déplacements d'éléments à l'intérieur de l'optique, ou en utilisant des lentilles liquides ou tout autre moyen électrique, mécanique et/ou magnétique permettant de modifier les formes et/ou les positions des éléments constituant l'optique, de manière à ce que le capteur soit dans le plan de focalisation de l'image de la scène capturée.

L'utilisation d'un dispositif de modulation de phase à cristaux liquides (DPLC) est un autre exemple de modification des propriétés du système optique permettant d'adapter la focalisation.

L'invention comprend l'étape de positionner le module autofocus pour capturer une image avec une focalisation prédéfinie du système. Par focalisation prédéfinie, on peut entendre la focalisation obtenue lorsque le module autofocus n'est pas activé et notamment de manière avantageuse toute position dans laquelle la focalisation reste stable sans consommation de courant ou la plus faible possible. La focalisation prédéfinie peut être obtenue dans la position du module autofocus au repos ou dans une position obtenue après modification de la focalisation.

La focalisation prédéfinie peut être avantageusement la focalisation hyperfocale permettant d'obtenir des images nettes à l'infini avec une profondeur de champ maximale, ou une autre focalisation déterminée pour par exemple maximiser la profondeur de champ du second mode. La focalisation prédéfinie peut également dépendre d'un réglage de l'utilisateur ou d'un réglage automatique, par exemple l'ouverture ou la focale de l'optique. La focalisation prédéfinie peut être également toute position obtenue suite au démarrage du système ou obtenue pendant le fonctionnement du système et notamment suite à la mise en oeuvre du premier mode.

L'invention met en oeuvre des moyens de traitement d'image. Les moyens de traitement d'images peuvent être intégrés avec le capteur et l'optique ou situés dans un appareil distinct relié au système de capture d'image par des moyens de transmission.

On appelle moyens de traitement d'image un logiciel qui prend en entrée une ou plusieurs images et qui effectue des traitements sur ces images. Ces traitements peuvent comprendre, notamment :

- calculer une image corrigée, et/ou
- effectuer des mesures, et/ou
- combiner plusieurs images, et/ou
- améliorer la fidélité des images, et/ou
- améliorer la qualité subjective des images, et/ou

- détecter des objets ou personnes dans une scène, et/ou
- ajouter des objets ou personnes dans une scène, et/ou
- remplacer ou modifier des objets ou personnes dans une scène, et/ou
- retirer les ombres d'une scène, et/ou
- ajouter des ombres dans une scène, et/ou
- rechercher des objets dans une base d'images.

Dans un mode de réalisation, l'autre image est par exemple capturée ultérieurement à la capture de l'image initiale.

Dans un mode de réalisation, le système est adapté pour capturer une séquence d'images et comprend en outre un dispositif permettant lorsqu'au moins une image suivante est capturée avec la focalisation prédéfinie ou une autre focalisation, de sélectionner un mode de fonctionnement, parmi le premier mode et le second mode, en fonction d'au moins une valeur représentative de la netteté estimée à partir de l'image suivante, dans le second mode, l'image suivante ou une autre image capturée étant traitée par les moyens de traitement numérique, l'autre image étant capturée avec la même focalisation que l'image suivante.

Dans un mode de réalisation, dans le second mode de fonctionnement, les moyens de traitement numérique sont adaptés pour appliquer un traitement d'images numérique d'amélioration de la netteté sur l'image initiale, l'image suivante ou une autre image capturée, sans mettre en oeuvre le module autofocus. Dans un tel mode de réalisation, les premier et second modes de fonctionnement sont destinés à obtenir une image plus nette de la scène.

Dans un mode de réalisation, cette autre image est par exemple capturée ultérieurement à la capture de l'image initiale.

Dans un mode de réalisation du système de capture d'images selon l'invention, la valeur représentative de la netteté est déterminée en fonction de :

- une relation entre les nettetés d'au moins deux composantes de couleurs respectives sur l'image initiale ; et/ou
- la comparaison entre les nettetés respectives d'au moins deux composantes de couleurs sur l'image initiale.

Ces dispositions permettent de sélectionner le mode de fonctionnement sur la base uniquement de mesures réalisées sur l'image initiale.

Dans un mode de réalisation, le système de capture d'images est en outre adapté pour, suite à une sélection du premier mode de fonctionnement, choisir un réglage de focalisation en fonction de :

- une relation entre les nettetés d'au moins deux couleurs respectives déterminées en fonction de l'image initiale ; et/ou
- une mesure de l'astigmatisme sur au moins une région de l'image initiale et sur au moins une couleur.

Cette disposition permet de diminuer ainsi le nombre d'itérations nécessaires mises en oeuvre par la fonction d'autofocus, diminuant ainsi la latence et la consommation d'énergie nécessaires.

Dans un mode de réalisation, le système de capture d'images est en outre adapté pour, suite à une sélection du second mode de fonctionnement, sur au moins une région de l'image traitée par les moyens de traitement numérique, identifier une composante de couleur plus nette et une composante de couleur moins nette, et pour modifier l'intensité de pixels de l'image traitée pour la couleur moins nette en fonction de l'intensité de pixels de l'image pour la couleur plus nette.

Cette disposition permet ainsi d'améliorer aisément par traitement numérique la netteté de l'image traitée.

Suivant un second aspect, l'invention propose un procédé de capture d'images destiné à un système comprenant une optique, un capteur, un module d'autofocus adapté pour régler la focalisation du système et des moyens de traitement numérique, comprenant les étapes suivantes :

- estimer une valeur représentative de la netteté sur au moins une région d'au moins une image initiale capturée d'une scène, ledit module autofocus étant positionné pour capturer l'image initiale avec une focalisation prédéfinie du système ; en fonction d'au moins la valeur représentative de la netteté estimée, sélectionner un mode de fonctionnement parmi un premier mode et un second mode,

selon lequel dans le premier mode, le module d'autofocus est mis en oeuvre pour régler la focalisation du système pour capturer une image plus nette de la scène ; et
dans le second mode l'image initiale capturée est traitée par les moyens de traitement numérique, l'autre image étant capturée avec ladite focalisation prédéfinie du système.

Suivant un troisième aspect, l'invention propose un programme informatique et/ou composant électronique à installer dans un module de traitement d'un système de capture d'images adapté pour capturer au moins une image d'une scène et comprenant une optique, un capteur, un module d'autofocus adapté pour régler la focalisation du système, ledit programme comprenant des instructions et/ou le dit composant comprenant des circuits pour mettre en oeuvre les étapes d'un procédé suivant le deuxième aspect de l'invention lors d'une exécution du programme et/ou une activation du composant par ledit module de traitement.

D'autres caractéristiques et avantages de l'invention apparaîtront encore à la lecture de la description qui va suivre. Celle-ci est purement illustrative et doit être lue en regard des dessins annexés sur lesquels :

- la figure 1 représente un système 1 de capture d'image dans un mode de réalisation de l'invention ;
- la figure 2 représente les étapes d'un procédé selon l'invention ;
- la figure 3 illustre les variations de la netteté de l'image d'un objet en fonction de composantes de couleur distinctes et en fonction de la distance séparant l'objet et l'appareil photo ;
- la figure 4 représente la netteté relative entre deux composantes de couleurs d'une image en fonction de la défocalisation de l'image ;
- la figure 5 illustre la consommation électrique d'un système de capture d'image de l'art antérieur, avec un module autofocus standard en fonction de la défocalisation ;
- la figure 6 illustre la consommation électrique d'un système de capture d'image selon l'invention en fonction de la défocalisation.

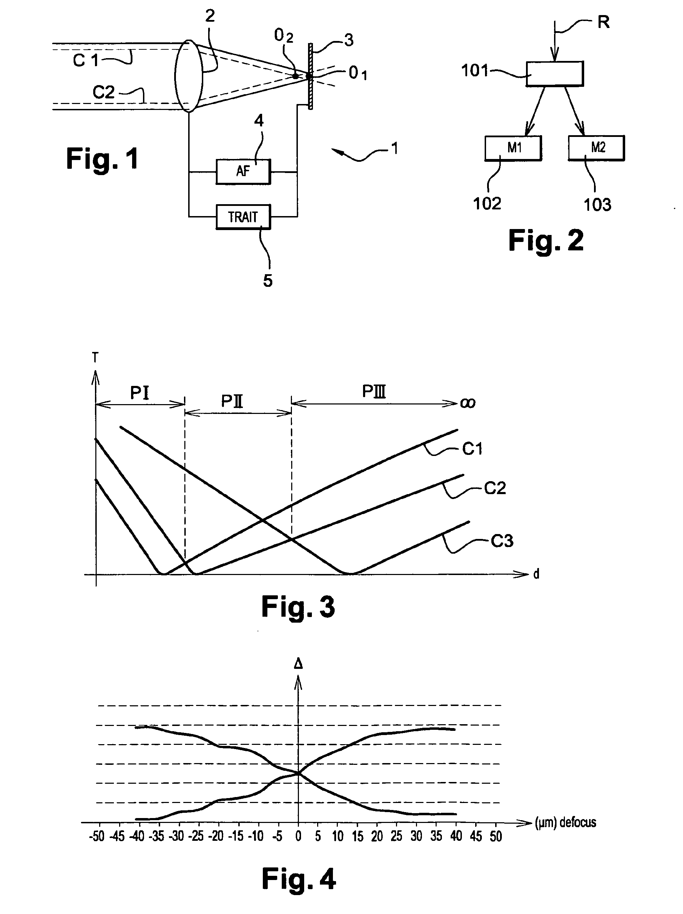

Sur la figure 1 est représenté un système 1 de capture d'image dans un mode de réalisation de l'invention, par exemple un appareil photo.

L'appareil photo 1 comporte une optique 2, un capteur 3, un module d'autofocus 4 et une unité de traitement 5.

Le module autofocus 4 est adapté pour effectuer une mise au point automatique en fonction d'une image de la scène, dans le cas considéré ici par exemple en faisant varier la distance entre l'optique 2 et le capteur 3 à l'aide d'un moteur (d'autres types de focalisation tels que décrits ci-dessus peuvent néanmoins être mis en oeuvre dans l'invention).

Le capteur 3 est doté d'éléments sensibles permettant de convertir un flux de photons en signal électrique. Dans le mode de réalisation considéré, les éléments sensibles ont une sensibilité en trois couleurs. L'image numérique capturée est donc une image couleur comportant trois composantes de couleurs respectives.

On notera que l'invention peut être mise en oeuvre en considérant deux couleurs ou plus.

Dans le mode de réalisation ici décrit, on considère qu'une image capturée comporte une composante de couleur bleue C1 (longueurs d'ondes sensiblement entre 400 et 500 nm), une composante de couleur verte C2 (longueurs d'ondes sensiblement entre 500 et 600 nm) et une composante de couleur rouge C3 (longueurs d'ondes sensiblement entre 600 et 700 nm).

Dans d'autres modes de réalisation, d'autres composantes (par exemple infrarouge, ultraviolet etc.) et/ou un nombre quelconque de composantes supérieur ou égal à deux peut être considéré pour la mise en oeuvre de l'invention.

On rappelle ci-dessous deux points.

- Premièrement, le point de focalisation de l'optique 2 est propre à chaque couleur, de telle sorte qu'un point de focalisation O1 propre à une couleur C1 est distinct du point de focalisation 02 pour une autre couleur C2. Par conséquent, l'image formée par une seconde couleur au niveau du capteur est moins nette ou plus nette que l'image formée par une première couleur, ce qui réduit la netteté de l'image globale formée par le capteur.

- Deuxièmement, le point de focalisation de l'optique 2 pour une longueur d'onde est variable en fonction de la distance à laquelle se situe la scène représentée sur l'image.

La figure 3 illustre les variations de la netteté de composantes de couleurs C1, C2, C3 d'un objet capturé en fonction de la distance d entre l'optique 2 et l'objet à capturer. Les composantes de couleur C1, C2, C3 correspondant par exemple respectivement aux composantes bleue, verte et rouge. En abscisse figure la distance d et en ordonnée le diamètre T de la tache image de l'objet.

La plage des distances d a été subdivisée en trois parties : la partie où la composante bleue est la plus nette est la partie PI dite « macro » (typiquement inférieure à 60 cm), la partie PII où la composante de couleur verte est plus nette que la composante bleue et que la composante rouge est la partie dite « portrait » (typiquement comprise entre 60 cm et 4 m), et la partie PIII où la composante rouge est plus nette que la composante bleue et que la composante verte est la partie dite « paysage » (typiquement supérieure à 4 m).

On notera que cet ordre de focalisation particulier entre les couleurs n'est considéré qu'à titre d'exemple. L'invention peut être mise en oeuvre quel que soit l'ordre de focalisation entre les couleurs, notamment dans des systèmes avec inversion de chromatisme (réalisés par exemple à l'aide d'un objet diffractif).

Considérons une image initiale I en couleur d'une scène capturée par l'appareil photo 1, le module autofocus 4 étant fixé pour un objet à l'infini ou au delà (en effet, il est fréquent d'avoir des modules autofocus réglés au-delà de l'infini afin de garantir la netteté à l'infini malgré les écarts thermiques et les erreurs de positionnements qui provoquent une défocalisation).

L'appareil photo 1 est adapté pour mettre en oeuvre les étapes suivantes décrites en référence à la figure 2.

Dans une étape 101, l'unité de traitement 5 effectue au moins une mesure de netteté sur une zone Z déterminée dans l'image I, le module autofocus 4 étant positionné pour capturer l'image initiale avec une focalisation prédéfinie du système.

Dans un mode de réalisation, pour cette mesure, l'optique est calée à l'origine à l'hyperfocale afin de profiter d'une plus grande profondeur de champ dans le second mode (M2).

Dans un mode de réalisation, la zone Z est constituée de toute l'image I, dans d'autres modes de réalisation, la zone Z correspond à un groupe sélectionné de pixels.

En fonction de la netteté mesurée et d'une règle R de sélection définie notamment en fonction de la netteté mesurée, l'unité de traitement 5 sélectionne un mode de fonctionnement parmi le mode M1 et le mode M2.

Si le mode de fonctionnement sélectionné dans l'étape 101 est le mode M1, alors dans une étape 102, le module autofocus 4 est déclenché de manière à obtenir une image de la scène avec une netteté améliorée. Un processus itératif de réglage de focalisation, par exemple d'une distance optimale entre l'optique 2 et le capteur 3, correspondant à une netteté optimale (ou au moins supérieure à un seuil minimum déterminé), est alors mis en oeuvre, en calculant, pour chaque modification de la distance séparant l'optique 2 et le capteur 3, une mesure respective représentative de la netteté de l'image de la scène capturée pour la distance considérée séparant l'optique 2 et le capteur 3.

Si le mode de fonctionnement sélectionné dans l'étape 101 est le mode M2, alors dans une étape 103, des traitements numériques sont appliqués par l'unité de traitement 5 sur l'image initiale de la scène capturée (ou éventuellement sur une autre image), par exemple de manière à obtenir une image de la scène avec une netteté améliorée, et ce sans mettre en oeuvre la fonction d'autofocus.

Le contenu des différentes étapes est maintenant détaillé ci-dessous.

**Etape 101**

La mesure de netteté sur la zone Z de l'image I effectuée par l'unité de traitement 5 dans l'étape 101 peut être une mesure globale sur l'image ou au contraire être fonction de composantes couleurs considérées individuellement.

Dans un mode de réalisation de l'étape 101, une mesure de netteté globale est réalisée et la règle de sélection R correspond par exemple à la comparaison entre la netteté mesurée et un seuil déterminé. Si la netteté mesurée est inférieure au seuil déterminé, le mode de fonctionnement M1 est sélectionné. Sinon le mode de fonctionnement M2 est sélectionné.

Dans un autre mode de réalisation de l'étape 101, l'unité de traitement 5 effectue une mesure de netteté pour une composante de couleur et sélectionne un mode de fonctionnement parmi les modes M1 et M2 en comparant la mesure de netteté avec un seuil déterminé.

Dans un autre mode de réalisation de l'étape 101, l'unité de traitement 5 effectue une mesure de netteté pour plusieurs composantes de couleurs et sélectionne un mode parmi les modes de fonctionnement M1 et M2 en comparant les mesures de netteté avec des seuils respectifs déterminés. Dans un autre mode de réalisation de l'étape 101, l'unité de traitement 5 effectue une mesure de netteté selon chacune de deux directions différentes et sélectionne un mode parmi les modes de fonctionnement M1 et M2 en comparant les mesures de netteté.

Dans un autre mode de réalisation de l'étape 101, l'unité de traitement 5 effectue une mesure relative de netteté entre au moins deux composantes de couleurs. Par exemple, elle détermine quelle est la composante de couleur la plus nette de l'image I entre la composante bleue et la composante verte. Puis si la composante bleue est la plus nette des deux composantes bleue et verte, alors l'unité de traitement 5 sélectionne le mode de fonctionnement M1, sinon le mode de fonctionnement M2 est sélectionné.

Ce mode de réalisation considéré ci-dessus pour l'étape 101 revient à utiliser le module autofocus 4 pour une scène capturée située dans la partie PI « macro » et à utiliser un unique traitement numérique sans mettre en oeuvre le module autofocus 4 pour les scènes capturées situées dans les parties PII « portrait » et PIII « paysage », la sélection entre les deux modes M1 et M2 étant effectuée simplement sur la base d'une comparaison entre les nettetés de deux composantes de couleurs.

Dans d'autres modes de réalisation, le mode M1 peut être sélectionné par exemple pour les parties « macro » et « portrait », et le mode M2 pour la partie « paysage ».

Dans un mode de réalisation, le mode de fonctionnement M1 est sélectionné lorsque les deux conditions suivantes Cond1 et Cond2 sont respectées :

> Cond1 : la scène est située dans la zone macro (ie la composante bleue est plus nette que la composante verte) ;
> Cond2 : la netteté de la composante bleue étant en outre inférieure à un seuil déterminé.

Ou alternativement la condition Cond2 prend en compte la netteté relative de deux composantes couleurs ou plus, et est donc fonction d'une relation entre des nettetés de plusieurs composantes couleurs.

Dans un autre mode de réalisation, la sélection du mode de fonctionnement est fonction par exemple de la comparaison entre un seuil et une fonction des nettetés de différentes composantes couleurs, par exemple la différence de netteté entre les composantes C1 et C3 divisée par la netteté de la composante C2.

Une mesure de netteté relative peut être fonction d'un quotient ou d'une différence entre la mesure de netteté pour une composante couleur et la mesure de netteté pour une autre composante couleur.

La mesure de netteté relative d'une composante couleur par rapport à une autre est un avantage par rapport à une mesure absolue de netteté sur l'image, car elle est plus précise et ne dépend pas du contenu de la scène observée. En effet une mesure absolue n'est pas suffisamment fiable dans certains cas pour déterminer si on doit se placer en mode M1 ou M2. Par exemple une mesure de netteté absolue peut fonctionner parfaitement sur une scène bien contrastée comme une mire, alors qu'elle ne sera pas fiable si jamais le contenu de la scène est lisse.

Ainsi il est avantageux d'utiliser une optique (par exemple une lentille) présentant un chromatisme longitudinal afin de pouvoir réaliser une mesure relative de netteté d'une composante couleur par rapport à une autre et d'avoir une mesure plus stable qui ne dépend pas de la scène observée.

D'autres règles de sélection peuvent être définies par exemple combinant les règles indiquées ci-dessous ou mettant en oeuvre d'autres règles.

Par ailleurs, l'invention s'applique avec les diverses mesures de netteté connues, par composante de couleur, ou globalement. Une mesure de netteté peut correspondre à une valeur scalaire ou un vecteur.

Par exemple, la netteté d'une couleur peut correspondre à la mesure d'une valeur dénommée BXU qui est une mesure de la surface de tache de flou, telle que décrite dans l'article publié dans les « Proceedings of IEEE, International Conference of Image Processing, Singapore 2004 », et intitulé « Uniqueness of Blur Measure » de Jérôme BUZZI et Frédéric GUICHARD.

La netteté peut être indiquée en fonction de la variance de la tache image ou encore à l'aide de la FTM (Fonction de Transfert de Modulation) qui est le module de la transformée de Fourier de la tache image.

Diverses méthodes de mesures d'une telle netteté sont décrites dans des manuels et publications tels que, par exemple, le « Handbook of Image&Video processing » édité par Al Bovik et publié par Academic press, pages 415 à 430.

Dans une réalisation, la netteté d'une composante de couleur est obtenue par calcul d'un gradient.

Par exemple, on estime une valeur de netteté sur des pixels de la zone Z de l'image numérique en effectuant pour chacun ou certains des pixels P, une mesure M en le pixel P, pour une composante de couleur C donnée correspondant au gradient de la variation de C dans un voisinage de P. Elle est obtenue par le calcul suivant :

> Pour une couleur C donnée, on considère V(P) un voisinage du pixel P.

On note GM la moyenne de l'amplitude des gradients sur le voisinage V(P), et SM la moyenne de l'amplitude des différences entre GM et les gradients sur le voisinage V(P).

Un gradient se calcule par l'amplitude de la différence des intensités de deux pixels d'une même couleur. Les gradients dans le voisinage V(P) correspondent aux gradients mettant en jeu un nombre prédéterminé de couples de pixels dans le voisinage V(P).

La mesure M représentative de la netteté du pixel P ayant une couleur C peut être définie par le rapport entre SM et GM. On obtient ainsi une valeur M (P, C).

Alors que dans un appareil de capture d'image avec un module autofocus standard, il faut forcément activer le module autofocus pour déterminer si l'image est nette, ce qui signifie l'acquisition d'au moins deux images pour comparer leur netteté, un appareil de capture d'image selon la présente invention permet, avec la capture d'une seule image, de définir si la mise en oeuvre du module autofocus est nécessaire ou non.

**Etape 102 :**

Dans un mode de réalisation, lorsque le mode de fonctionnement M1 est sélectionné, l'unité de traitement 5 calcule une consigne de réglage de focalisation, par exemple une distance à appliquer entre l'optique 2 et le capteur 3 pour la mise en oeuvre de la fonction d'autofocus et la fournit au module d'autofocus 4. Cette consigne de réglage de focalisation est par exemple calculée en fonction d'une ou plusieurs mesures de netteté effectuée(s) avant l'utilisation du module autofocus, par exemple une mesure de netteté effectuée dans l'étape 101.

Par exemple, comme illustré en figure 4, à partir de la netteté relative entre deux composantes de couleurs (ici un graphe établi pour l'appareil photo 1 représentant la valeur Δ de la différence entre la netteté de la couleur C1 et celle de la couleur C3 divisée par la netteté de la couleur C2 et la différence opposée) on peut en déduire une valeur de défocalisation de l'image, cette défocalisation étant représentative du réglage de focalisation à mettre en oeuvre, dans le cas considéré de la variation de distance à appliquer entre le capteur 3 et l'optique 2).

Cette disposition a pour effet d'accélérer la convergence du processus itératif mis en oeuvre par le module autofocus 4 et donc de réduire la latence et la consommation d'énergie nécessaires.

Dans un autre mode de réalisation il est possible d'utiliser la dépendance de l'astigmatisme avec la focalisation afin de réduire encore plus la latence et plus particulièrement lorsque la valeur Δ n'est plus linéaire avec la défocalisation.

En présence d'astigmatisme dans une optique, la forme de la tache image dépend de la focalisation. De part et d'autre du point de focalisation où la tache image est symétrique, une direction sera privilégiée par rapport à une autre et cela aura pour effet que dans une direction, l'image sera nette et sera floue pour une direction perpendiculaire. Par conséquent en fonction de la direction de netteté dans une image, on peut la relier à la défocalisation. Pour un système symétrique non corrigé totalement de l'astigmatisme (cela concerne une grande majorité des systèmes optiques), celui-ci apparaîtra dans le champ. Lors de la phase de conception optique du système, il est possible d'établir une table de correspondance entre une mesure de l'astigmatisme et/ou de sa direction avec la défocalisation de l'optique. Par ailleurs il est possible d'envisager, pour des systèmes optiques présentant de forts désalignements des éléments optiques le constituant, une phase de calibration reliant une mesure de l'astigmatisme et/ou de sa direction sur l'axe optique (centre de l'image) avec la défocalisation. Cela est possible car lorsqu'un système est constitué d'éléments non alignés les uns par rapport aux autres, il présente un astigmatisme au centre de l'image.

Par ailleurs, cette mesure de la défocalisation en utilisant l'astigmatisme est relativement insensible au contenu de la scène car l'astigmatisme est différent en fonction de la composante couleur considérée, ce qui permet de différencier l'astigmatisme venant de l'optique et donc caractéristique de la défocalisation de celui issu de la scène qui lui ne dépend pas de la composante couleur.

**Etape 103 :**

Dans un mode de réalisation, lorsque le mode de fonctionnement M2 est sélectionné, l'unité de traitement 5 procède à des traitements numériques de l'image initiale I et ne met pas en oeuvre la fonction d'autofocus.

Les traitements numériques effectués peuvent être divers : par exemple reconnaissance de forme, réglage de la balance des blancs, réglage de la courbe tonale, dématriçage ...

Dans un mode de réalisation, les traitements numériques correspondent à des traitements décrits dans le document PCT/FR2006/050197, adaptés pour améliorer la netteté d'au moins une composante de couleur en choisissant parmi les couleurs de l'image au moins une composante de couleur dénommée « couleur nette » et en répercutant la netteté de la composante de couleur nette sur au moins une autre composante de couleur moins nette.

Ainsi considérons par exemple le mode de réalisation décrit ci-dessus dans lequel le mode de fonctionnement M2 était sélectionné suite à la détermination que la netteté de la composante bleue C1 était inférieure à la netteté de la composante de couleur verte C2.

Il est alors déterminé dans une étape suivante quelle est la composante de couleur la plus nette entre la composante de couleur C2 et la composante de couleur C3. La composante de couleur déterminée la plus nette est nommée ci-dessous la couleur nette et les deux autres composantes de couleur sont nommées les composantes à améliorer.

Dans cet exemple, CA, CO et CN sont respectivement des intensités d'un pixel, caractérisées par des niveaux de gris et représentatives respectivement de la composante de couleur améliorée, de la composante de couleur à améliorer et de la composante de couleur nette.

On effectue la répercussion de la netteté de la composante de couleur nette sur la composante de couleur à améliorer en utilisant un filtre F, selon une formule du type :

$$CA = CN + F (CO - CN)$$

Ceci a pour effet de retirer les hautes fréquences de la composante de couleur à améliorer et à lui affecter à la place les hautes fréquences de la composante de couleur nette.

Typiquement, le filtre F présentera la particularité d'enlever les détails de l'image sur laquelle on l'applique. Pour cela on pourra utiliser un filtre linéaire passe-bas (ou moyenneur). On peut également utiliser un des nombreux filtres non linéaires connus présentant la particularité d'enlever des détails comme par exemple un filtre médian.

A ce stade, il convient de rappeler que la rétine humaine présente une sensibilité particulièrement élevée, vis-à-vis des détails d'une image, pour la couleur verte de telle sorte que le réglage des systèmes optiques vise généralement à obtenir une netteté élevée pour cette couleur pour une certaine plage de mise au point (cf, par exemple, les pages 30 à 33 de l'ouvrage « Color appearance models », de Mark D. Fairchild édité par Addison Wesley).

Ainsi, selon une constatation propre à l'invention, un dispositif optique délivrant des images dont la netteté n'est pas satisfaisante pour l'oeil humain peut présenter une netteté satisfaisante pour une de ses couleurs, telles que le bleu ou le rouge, pour lesquelles l'oeil présente une sensibilité moindre lorsqu'il considère des détails.

Typiquement, pour une optique focalisée à la distance hyperfocale, en considérant une image présentant un objet proche et un objet lointain, il apparaît que la netteté de l'objet lointain est généralement favorisée avec une couleur verte tandis que la netteté de l'objet proche est améliorée en considérant la couleur bleue.

Il apparaît alors important de pouvoir améliorer des régions d'une image selon différentes couleurs nettes en fonction de la netteté relative entre deux couleurs.

De fait, dans une réalisation de l'invention, on décompose l'image I en régions. Puis en considérant successivement chaque région, on identifie la couleur la plus nette pour la région. Dans un mode de réalisation on répercute la netteté de la couleur la plus nette sur les autres composantes couleurs dans la région considérée. Dans un autre mode de réalisation, on applique une correction globale sur l'image qui est calculée à l'aide de coefficients de pondération, tels qu'un coefficient de pondération est représentatif du nombre de fois où une couleur nette associée a été identifiée sur les régions.

Un tel traitement effectué en fonction des caractéristiques de différentes régions de l'image est avantageux par rapport à l'utilisation d'un module autofocus dans un système de capture d'image de l'art antérieur. En effet dans le cas d'une scène avec des objets situés à différentes distances, un système de capture de l'art antérieur va focaliser sur l'un d'entre eux uniquement alors que selon l'invention une image nette pour tous les objets considérés est obtenue.

Dans un mode de réalisation, les traitements indiqués ci-dessus dans les étapes 101, 102 et 103 sont mis en oeuvre par l'unité de traitement 5 suite à l'exécution d'un programme comprenant des instructions pour mettre en oeuvre les étapes qui incombent à l'unité de traitement 5 lors d'une exécution du programme par des moyens de calcul de l'unité de traitement 5.

Dans le mode de réalisation décrit, l'étape d'amélioration de la netteté 103 après sélection du mode M2 a été effectuée sur l'image initiale I capturée.

Dans un autre mode de réalisation, le traitement d'amélioration de l'étape 103 s'effectue sur une ou plusieurs autres images, par exemple capturée(s) postérieurement à l'image initiale, par exemple dans le cas d'images d'une vidéo, l'autre image étant capturée avec la focalisation prédéfinie.

La mise en oeuvre de l'invention donne des résultats particulièrement avantageux dans le cas de capture d'images vidéo.

En effet, la latence due au fonctionnement itératif du module autofocus était très pénalisante dans le cas des images vidéo, surtout lorsque l'objet capturé était en mouvement, ce qui donnait lieu en outre à des phénomènes d'oscillations de la focalisation lors de la visualisation des images mises au point.

La présente invention diminue considérablement le phénomène d'oscillations rencontré et le temps de latence nécessaire pour avoir une image nette lors de capture d'images vidéo. En effet, elle permet de diminuer considérablement l'utilisation du module autofocus lorsque le mode de fonctionnement M2 peut être sélectionné, ce qui est appréciable particulièrement lorsque l'objet bouge. Cela revient dans un sens à une stabilisation d'image.

La stabilisation est encore accrue lorsqu'un réglage de focalisation préalable déterminé en fonction d'une mesure de netteté effectuée est appliqué préalablement au module autofocus, tel que spécifié lors de la description ci-dessus du déroulement de l'étape 102.

L'invention permet aussi d'augmenter la fiabilité de l'opération de stabilisation d'image, destinée à compenser le flou dû à un mouvement au niveau, non pas de la scène elle-même, mais du système optique/capteur, en utilisant une correction numérique et/ou optique (en bougeant des lentilles par exemple).

En étant beaucoup plus rapide pour converger dans le mode M1 la mesure de stabilisation faite sur une image nette est plus fiable. Dans le mode M2, sans utiliser le module autofocus l'image est nette et de même la mesure utilisée pour la stabilisation d'image est plus fiable.

Ainsi, comme la latence est réduite, l'image nette est obtenue plus rapidement et donc la mesure de stabilisation est plus fiable. Sur les modules autofocus de l'art antérieur, les oscillations dues à la dichotomie pour se placer dans la bonne configuration rendent la mesure pour la stabilisation d'image difficile.

Sur la figure 6 est illustrée la consommation électrique d'un système de capture selon l'invention: la courbe L2 entre les points J1 et K1 représente les valeurs d'intensité électrique en fonction des valeurs de défocalisation (Def) dans le cas d'un système optique focalisant entre l'infini est une distance proche donnée. Le point J1 correspond à une défocalisation nulle (objet à l'infini), le point K1 à une défocalisation maximale (objet proche).

La ligne verticale en pointillés indiquée par la flèche marque le passage du mode de fonctionnement M2 (à gauche de cette ligne verticale) au mode de fonctionnement M1 (à droite de cette ligne verticale).

Ainsi dans le mode de fonctionnement M1, la consommation électrique dans un système de capture selon l'invention est égale à celle d'un système de l'art antérieur pour une même défocalisation (voir figure 5). En revanche, dans le mode M1, grâce à la fourniture préalable d'une consigne de focalisation, la courbe L1 n'est pas parcourue plusieurs fois dans le cadre d'un processus itératif de dichotomie pour déterminer la position de focalisation comme dans l'art antérieur.

Et pour toutes les valeurs de défocalisation dans le mode M2, la consommation électrique dans un système de capture selon l'invention est égale à celle d'un système de l'art antérieur pour une défocalisation nulle, c'est-à-dire à la consommation minimale.

Par exemple, dans un mode de réalisation décrit plus haut où le mode de fonctionnement M2 correspondait aux parties Portrait et Paysage, et le mode de fonctionnement M1 correspondait à la partie Macro, une telle consommation minimale a lieu pour les scènes situées à une distance du système comprise entre l'infini et environ 60 cm, ce qui correspond à la majeure utilisation faite des systèmes de captures d'image.

La présente invention permet donc de restreindre l'utilisation du module autofocus à un nombre limité de cas, lorsque l'amélioration de la netteté n'est pas suffisante, ou pertinente par un traitement numérique permettant de transférer la netteté d'une couleur plus nette sur une ou des couleurs moins nettes. L'invention permet donc d'améliorer la netteté des images capturées tout en limitant la consommation d'énergie et la latence de mise au point.

Une mise au point peut donc être effectuée dans les photophones même en prévisualisation. Par ailleurs, lors de la prise de vidéos, les images successives peuvent également être nettes (ce qui n'était pas possible auparavant, la mise au point par le module autofocus à chaque image de la vidéo n'étant pas possible du fait de la succession rapide des images).

## Revendications

1. Système de capture d'images (1) adapté pour capturer au moins une image d'une scène, ledit système comprenant une optique (2), un capteur (3), un module d'autofocus (4) adapté pour régler la focalisation du système et des moyens de traitement numérique (5),

   ledit système étant adapté pour estimer au moins une valeur représentative de la netteté sur au moins une région d'au moins une image initiale capturée d'une scène ; ledit module autofocus étant positionné pour capturer l'image initiale avec une focalisation prédéfinie du système ;

   ledit système étant adapté pour, en fonction d'au moins la valeur représentative de la netteté estimée, sélectionner un mode de fonctionnement, parmi un premier mode (M1) et un second mode (M2),

   dans lequel dans le premier mode (M1), le module d'autofocus (4) est mis en oeuvre pour régler la focalisation du système pour capturer une image plus nette de la scène ;

   dans le second mode (M2), l'image initiale ou une seconde image capturée est traitée par les moyens de traitement numérique (5), ladite image capturée ayant été capturée avec ladite focalisation prédéfinie du système ; et

   dans lequel dans le second mode (M2), les moyens de traitement numérique (5) appliquent un traitement d'images numérique d'amélioration de la netteté sur l'image initiale, l'image suivante ou une autre image capturée, sans mettre en oeuvre le module autofocus.

2. Système de capture d'image selon la revendication 1, adapté pour capturer une séquence d'images et comprenant en outre un dispositif permettant lorsqu'au moins une image suivante est capturée avec la focalisation prédéfinie ou une autre focalisation, de sélectionner un mode de fonctionnement, parmi le premier mode (M1) et le second mode (M2), en fonction d'au moins une valeur représentative de la netteté estimée à partir de l'image suivante, dans le second mode (M2), l'image suivante ou une seconde image capturée étant traitée par les moyens de traitement numérique (5), l'image capturée étant capturée avec la même focalisation que l'image suivante.

3. Système de capture d'images (1) selon l'une des revendications 1 à 2, dans lequel la valeur représentative de la netteté est déterminée en fonction de :

   - une relation entre les nettetés d'au moins deux composantes de couleurs respectives (C1, C2, C3) sur l'image initiale ; et/ou
   - la comparaison entre les nettetés respectives d'au moins deux composantes de couleurs respectives (C1, C2, C3) sur l'image initiale.

4. Système de capture d'images (1) selon l'une quelconque des revendications précédentes, adapté pour, suite à une sélection du premier mode (M1), choisir un réglage de focalisation en fonction de :

- une relation entre les nettetés d'au moins deux composantes de couleurs respectives (C1, C2, C3) déterminées en fonction de l'image initiale; et/ou
- une mesure de l'astigmatisme sur au moins une région de l'image initiale et sur au moins une couleur.

5. Système de capture d'images (1) selon l'une quelconque des revendications précédentes, adapté pour, suite à une sélection du second mode (M2), sur au moins une région de l'image traitée par les moyens de traitement numérique, identifier une composante de couleur plus nette et une composante de couleur moins nette, et pour modifier l'intensité de pixels de l'image traitée pour la composante de couleur moins nette en fonction de l'intensité de pixels de l'image pour la composante de couleur plus nette.

6. Procédé de capture d'images destiné à un système de capture d'images (1) comprenant une optique (2), un capteur (3), un module d'autofocus (4) adapté pour régler la focalisation du système et des moyens de traitement numérique (5), comprenant les étapes suivantes :

- estimer au moins une valeur représentative de la netteté sur au moins une région d'au moins une image initiale capturée d'une scène, ledit module autofocus étant positionné pour capturer l'image initiale avec une focalisation prédéfinie du système ;
- en fonction d'au moins la valeur représentative de la netteté estimée, sélectionner un mode de fonctionnement, parmi un premier mode (M1) et un second mode (M2),

selon lequel dans le premier mode (M1) le module d'autofocus (4) est mis en oeuvre pour régler la focalisation du système (3) pour capturer une image plus nette de la scène ;

dans le second mode (M2), l'image initiale ou une seconde image capturée est traitée par les moyens de traitement numérique (5), ladite image capturée ayant été capturée avec ladite focalisation prédéfinie du système ; et

dans lequel dans le second mode (M2), les moyens de traitement numérique (5) appliquent un traitement d'images numérique d'amélioration de la netteté sur l'image initiale, l'image suivante ou une autre image capturée, sans mettre en oeuvre le module autofocus.

7. Procédé de capture d'image selon la revendication 6, adapté pour capturer une séquence d'images et comprenant en outre un dispositif permettant lorsqu'au moins une image suivante est capturée avec la focalisation prédéfinie ou une autre focalisation, de sélectionner un mode de fonctionnement, parmi le premier mode (M1) et le second mode (M2), en fonction d'au moins une valeur représentative de la netteté estimée à partir de l'image suivante, dans le second mode (M2), l'image suivante ou une seconde image capturée étant traitée par les moyens de traitement numérique (5), l'image capturée étant capturée avec la même focalisation que l'image suivante.

8. Procédé de capture d'images selon l'une des revendications 6 à 7, selon lequel la valeur représentative de la netteté est déterminée en fonction de :

- une relation entre les nettetés d'au moins deux composantes de couleurs respectives (C1, C2, C3) sur l'image initiale ; et/ou
- la comparaison entre les nettetés respectives d'au moins deux composantes de couleurs respectives (C1, C2, C3) sur l'image initiale.

9. Procédé de capture d'images (1) selon l'une quelconque des revendications 6 à 8, adapté pour suite à une sélection du premier mode (M1), choisir un réglage de focalisation en fonction de :

- une relation entre les nettetés d'au moins deux composantes de couleurs respectives (C1, C2, C3) sur l'image initiale, et/ou
- une mesure de l'astigmatisme présent sur au moins une région de l'image initiale et sur au moins une couleur.

10. Procédé de capture d'images selon l'une quelconque des revendications 6 à 9, selon lequel suite à une sélection du second mode (M2), sur au moins une région de l'image traitée par les moyens de traitement numérique, on identifie une composante de couleur plus nette et une composante de couleur moins nette, et on modifie l'intensité de pixels de l'image traitée pour la composante de couleur moins nette en fonction de l'intensité de pixels de l'image pour la composante de couleur plus nette.

11. Programme informatique et/ou composant électronique dans un module de traitement (5) d'un système de capture d'images (1) adapté pour capturer au moins une image d'une scène et comprenant une optique (2), un capteur (3), un module d'autofocus (4) adapté pour régler la focalisation du système, ledit programme comprenant des instructions et/ou le dit composant comprenant des circuits pour mettre en oeuvre les étapes d'un procédé selon l'une quelconque des revendications 6 à 10 lors d'une exécution du programme et/ou une activation du composant par ledit module de traitement.

**Patentansprüche**

1. Bildaufnahmesystem (1), das sich dazu eignet, zumindest ein Bild einer Szene aufzunehmen, wobei das besagte System eine Optik (2), einen Sensor (3), ein Autofokusmodul (4) umfasst, das sich dazu eignet, die Fokussierung des Systems einzustellen, sowie Mittel zur digitalen Bearbeitung (5), wobei sich das besagte System dazu eignet, zumindest einen repräsentativen Wert der Bildschärfe in zumindest einem Bereich zumindest eines ursprünglichen aufgenommenen Bildes einer Szene zu schätzen; wobei das besagte Autofokusmodul positioniert wird, um das ursprüngliche Bild mit einer vorbestimmten Fokussierung des Systems aufzunehmen; und sich das besagte System dazu eignet, um in Abhängigkeit von zumindest einem repräsentativen Wert der geschätzten Bildschärfe aus einem ersten Modus (M1) und einem zweiten Modus (M2) einen Betriebsmodus auszuwählen, bei dem das Autofokusmodul (4) im ersten Modus (M1) angewandt wird, um die Fokussierung des Systems einzustellen, um ein schärferes Bild der Szene aufzunehmen; im zweiten Modus (M2) wird das ursprüngliche Bild oder ein zweites aufgenommenes Bild mit den digitalen Bearbeitungsmitteln (5) bearbeitet, wobei das besagte aufgenommene Bild mit der besagten vorbestimmten Fokussierung des Systems aufgenommen worden ist; und bei dem die digitalen Bearbeitungsmittel (5) im zweiten Modus (M2) eine digitale Bildbearbeitung zur Verbesserung der Bildschärfe am ursprünglichen Bild, dem folgenden Bild oder einem anderen aufgenommenen Bild anwenden, ohne das Autofokusmodul zur Anwendung zu bringen.

2. Bildaufnahmesystem nach Anspruch 1, das sich dazu eignet, eine Bildsequenz aufzunehmen, und das darüber hinaus eine Vorrichtung umfasst, die es, wenn zumindest ein folgendes Bild mit der vorbestimmten Fokussierung oder einer anderen Fokussierung aufgenommen wird, ermöglicht, in Abhängigkeit von zumindest einem repräsentativen Wert der ab dem folgenden Bild geschätzten Bildschärfe aus einem ersten Modus (M1) und einem zweiten Modus (M2) einen Betriebsmodus auszuwählen, wobei das folgende Bild oder ein zweites aufgenommenes Bild im zweiten Modus (M2) von den digitalen Bearbeitungsmitteln (5) bearbeitet wird, und das aufgenommene Bild mit derselben Fokussierung aufgenommen wird, wie das folgende Bild.

3. Bildaufnahmesystem (1) nach einem der Ansprüche 1 bis 2, bei dem der repräsentative Wert der Bildschärfe in Abhängigkeit von den folgenden Parametern bestimmt wird:

   - einem Verhältnis zwischen den Bildschärfen zumindest zweier jeweiliger Farbkomponenten (C1, C2, C3) im ursprünglichen Bild; und/ oder
   - dem Vergleich zwischen den jeweiligen Bildschärfen zumindest zweier jeweiliger Farbkomponenten (C1, C2, C3) im ursprünglichen Bild.

4. Bildaufnahmesystem (1) nach irgendeinem der vorherigen Ansprüche, das sich dazu eignet, nach einer Auswahl des ersten Modus (M1) eine Fokussierungseinstellung in Abhängigkeit von den folgenden Parametern auszuwählen:

   - einem Verhältnis zwischen den Bildschärfen zumindest zweier jeweiliger Farbkomponenten (C1, C2, C3), die in Abhängigkeit vom ursprünglichen Bild bestimmt worden sind; und/ oder
   - einer Messung des Astigmatismus in zumindest einem Bereich des ursprünglichen Bildes und an zumindest einer Farbe.

5. Bildaufnahmesystem (1) nach irgendeinem der vorherigen Ansprüche, das sich dazu eignet, nach einer Auswahl des zweiten Modus (M2), in zumindest einem Bereich des durch die digitalen Bearbeitungsmittel bearbeiteten Bildes eine schärfere Farbkomponente und eine weniger scharfe Farbkomponente zu erkennen, und die Bildpunktintensität des behandelten Bildes für die weniger scharfe Farbkomponente in Abhängigkeit von der Bildpunktintensität des Bildes für die schärfere Farbkomponente zu ändern.

6. Bildaufnahmeverfahren, das für ein Bildaufnahmesystem (1) bestimmt ist, umfassend Optik (2), einen Sensor (3), ein Autofokusmodul (4) zum Einstellen der Fokussierung des Systems und Mittel zur digitalen Bearbeitung (5) mit den folgenden Schritten:

   - Einschätzen zumindest eines repräsentativen Wertes der Bildschärfe in zumindest einem Bereich zumindest eines ursprünglichen aufgenommenen Bildes einer Szene, wobei das besagte Autofokusmodul positioniert wird, um das ursprüngliche Bild mit einer vorbestimmten Fokussierung des Systems aufzunehmen;
   - in Abhängigkeit von zumindest einem repräsentativen Wert der geschätzten Bildschärfe aus einem ersten Modus (M1) und einem zweiten Modus (M2) einen Betriebsmodus auswählen,

   bei dem das Autofokusmodul (4) im ersten Modus (M1) angewandt wird, um die Fokussierung des Systems (3) einzustellen, um ein schärferes Bild der Szene aufzunehmen;

das ursprüngliche Bild oder ein zweites aufgenommenes Bild im zweiten Modus (M2) durch die digitalen Bearbeitungsmittel (5) bearbeitet wird, und das besagte aufgenommene Bild mit der besagten vorbestimmten Fokussierung des Systems aufgenommen worden ist; und

bei dem die digitalen Bearbeitungsmittel (5) im zweiten Modus (M2) eine digitale Bildbearbeitung zur Verbesserung der Bildschärfe am ursprünglichen Bild, dem folgenden Bild oder einem anderen aufgenommenen Bild anwenden, ohne das Autofokusmodul zur Anwendung zu bringen.

7.  Bildaufnahmeverfahren nach Anspruch 6, das sich dazu eignet, eine Bildsequenz aufzunehmen, und das darüber hinaus eine Vorrichtung umfasst, die es, wenn zumindest ein folgendes Bild mit der vorbestimmten Fokussierung oder einer anderen Fokussierung aufgenommen wird, ermöglicht, in Abhängigkeit von zumindest einem repräsentativen Wert der ab dem folgenden Bild geschätzten Bildschärfe aus einem ersten Modus (M1) und einem zweiten Modus (M2) einen Betriebsmodus auszuwählen, wobei das folgende Bild oder ein zweites aufgenommenes Bild im zweiten Modus (M2) von den digitalen Bearbeitungsmitteln (5) bearbeitet wird, und das aufgenommene Bild mit derselben Fokussierung aufgenommen wird, wie das folgende Bild.

8.  Bildaufnahmeverfahren nach einem der Ansprüche 6 bis 7, bei dem der repräsentative Wert der Bildschärfe in Abhängigkeit von den folgenden Parametern bestimmt wird:

    - einem Verhältnis zwischen den Bildschärfen zumindest zweier jeweiliger Farbkomponenten (C1, C2, C3) im ursprünglichen Bild; und/ oder
    - dem Vergleich zwischen den jeweiligen Bildschärfen zumindest zweier jeweiliger Farbkomponenten (C1, C2, C3) im ursprünglichen Bild.

9.  Bildaufnahmeverfahren (1) nach irgendeinem der Ansprüche 6 bis 8, das sich dazu eignet, nach einer Auswahl des ersten Modus (M1) eine Fokussierungseinstellung in Abhängigkeit von den folgenden Parametern auszuwählen:

    - einem Verhältnis zwischen den Bildschärfen zumindest zweier jeweiliger Farbkomponenten (C1, C2, C3), die in Abhängigkeit vom ursprünglichen Bild bestimmt worden sind; und/ oder
    - einer Messung des Astigmatismus in zumindest einem Bereich des ursprünglichen Bildes und an zumindest einer Farbe.

10. Bildaufnahmeverfahren nach irgendeinem der Ansprüche 6 bis 9, bei dem nach einer Auswahl des zweiten Modus (M2) in zumindest einem Bereich des durch die digitalen Bearbeitungsmittel bearbeiteten Bildes eine schärfere Farbkomponente und eine weniger scharfe Farbkomponente erkannt werden, und die Bildpunktintensität des behandelten Bildes für die weniger scharfe Farbkomponente in Abhängigkeit von der Bildpunktintensität des Bildes für die schärfere Farbkomponente geändert wird.

11. Informatikprogramm und/ oder elektronisches Bauteil in einem Bearbeitungsmodul (5) eines Bildaufnahmesystems (1), das sich dazu eignet, zumindest ein Bild einer Szene aufzunehmen, umfassend eine Optik (2), einen Sensor (3), ein Autofokusmodul (4), das sich dazu eignet, die Fokussierung des Systems einzustellen, und das besagte Programm Instruktionen umfasst und/oder das besagte Bauteil Kreise umfasst, um bei einer Ausführung des Programms und/oder einer Aktivierung des Bauteils durch das besagte Bearbeitungsmodul die Schritte eines Verfahrens nach irgendeinem der Ansprüche 6 bis 10 anzuwenden.

**Claims**

1.  A system for capturing images (1) intended to capture at least one image of a scene, said system including an optical system (2), a sensor (3), an autofocus module (4) for adjusting the focus of the system, and digital processing means (5),
    said system being designed to estimate at least one value representative of the sharpness in at least one area of at least one initial captured image of a scene; said autofocus module being positioned so as to capture the initial image with a predefined focus;
    on the basis of at least the value representative of the estimated sharpness, said system can select an operating mode from between a first mode (M1) and a second mode (M2),
    whereby in the first mode (M1), the autofocus module (4) is used to control the focus of the system in order to capture a sharper image of the scene;
    in the second mode (M2), the initial captured image or a second captured image is processed by the digital processing means (5), said captured image being captured with said predefined focus of the system; and
    whereby in the second mode (M2), the digital processing means (5) apply a digital image processing operation intended to improve the sharpness of the initial image, the subsequent image or another image captured, without implementing the autofocus module.

2.  A system for capturing images according to claim 1, intended to capture a sequence of images and also comprising a device which, when at least one subsequent image is captured with the predefined focus or another focus and on the basis of at least one value representative of the sharpness estimated from the subsequent image, can select an operating mode from between the first mode (M1) and the second mode (M2), in the second mode (M2), the subsequent image or a second image captured being processed by the digital processing means (5), the captured image being captured with the same focus as the subsequent image.

3. A system for capturing images (1) according to one of claims 1 to 2, wherein the value representative of the sharpness is determined according to:

- a relation between the levels of sharpness of at least two respective colour components (C1, C2, C3) in the initial image; and/or
- the comparison between the respective levels of sharpness of at least two respective colour components (C1, C2, C3) in the initial image.

4. A system for capturing images (1) according to any one of the previous claims, capable, after selecting the first operating mode (M1), of choosing a focus adjustment according to:

- a relation between the levels of sharpness of at least two respective colour components (C1, C2, C3) determined according to the initial image; and/or
- an astigmatism measurement in at least one area of the initial image and on at least one colour.

5. A system for capturing images (1) according to any one of the previous claims, capable, after selecting the second operating mode (M2) and in at least one region of the image processed by the digital processing means, of identifying a sharper colour component and a more blurred colour component and of modifying the pixel intensity of the image processed for the more blurred colour component according to the pixel intensity of the image for the sharper colour component.

6. A method for capturing images intended for an image capture system (1) including an optical system (2), a sensor (3), an autofocus module (4) for adjusting the focus of the system and digital processing means (5), comprising the following steps:

- estimating at least one value representative of the sharpness in at least one area of at least one initial captured image of a scene, said autofocus module being positioned so as to capture the initial image with a predefined focus;
- on the basis of at least the value representative of the estimated sharpness, selecting an operating mode from between a first mode (M1) and a second mode (M2),

whereby in the first mode (M1), the autofocus module (4) is used to control the focus of the system (3) in order to capture a sharper image of the scene;
in the second mode (M2), the initial image or a second captured image is processed by the digital processing means (5), said captured image being captured with said predefined focus; and
whereby in the second mode (M2), the digital processing means (5) apply a digital image processing operation intended to improve the sharpness of the initial image, the subsequent image or another image captured, without implementing the autofocus module.

7. A method for capturing images according to claim 6, intended to capture a sequence of images and also comprising a device which, when at least one subsequent image is captured with the predefined focus or another focus and on the basis of at least one value representative of the sharpness estimated from the subsequent image, can select an operating mode from between the first mode (M1) and the second mode (M2), in the second mode (M2), the subsequent image or a second image captured being processed by the digital processing means (5), the captured image being captured with the same focus as the subsequent image.

8. A method for capturing images according to one of claims 6 to 7, wherein the value representative of the sharpness is determined according to:

- a relation between the levels of sharpness of at least two respective colour components (C1, C2, C3) in the initial image; and/or
- the comparison between the respective levels of sharpness of at least two respective colour components (C1, C2, C3) in the initial image.

9. A method for capturing images (1) according to any one of claims 6 to 8, capable, after selecting the first operating mode (M1), of choosing a focus adjustment according to:

- a relation between the levels of sharpness of at least two respective colour components (C1, C2, C3) in the initial image, and/or
- an astigmatism measurement in at least one area of the initial image and on at least one colour.

10. A method for capturing images according to any one of claims 6 to 9, wherein, after selecting the second operating mode (M2) and in at least one region of the image processed by the digital processing means, a sharper colour component and a more blurred colour component are identified and the pixel intensity of the image processed for the more blurred colour component is modified according to the pixel intensity of the image for the sharper colour component.

11. A computer programme and/or electronic component within a processing module (5) of an image capture system (1) intended to capture at least one image of a scene and including an optical system (2), a sensor (3) and an autofocus module (4) for adjusting the focus of the system, said programme comprising instructions and/or said component comprising circuits to implement the steps of a method according to any one of claims 6 to 10 upon the execution of the programme and/or activation of the component by said processing module.

EP 2 465 255 B1

Fig. 1

Fig. 2

Fig. 3

Fig. 4

15

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2006050197 W

**Littérature non-brevet citée dans la description**

- **JÉRÔME BUZZI ; FRÉDÉRIC GUICHARD.** Proceedings of IEEE, International Conference of Image Processing, Singapore. *Uniqueness of Blur Measure,* 2004
- Handbook of Image&Video processing. Academic press, 415-430
- **MARK D. FAIRCHILD.** Color appearance models. Addison Wesley, 30-33